Europäisches Patentamt

(19) European Patent Office

Office européen des brevets

(11) Numéro de publication: **0 084 277**
**A2**

(12) **DEMANDE DE BREVET EUROPEEN**

(21) Numéro de dépôt: 82401854.3

(22) Date de dépôt: 08.10.82

(51) Int. Cl.³: **C 08 L 77/12**
**C 08 L 23/02**

(30) Priorité: 29.12.81 FR 8124380

(43) Date de publication de la demande:
27.07.83 Bulletin 83/30

(84) Etats contractants désignés:
AT DE NL SE

(71) Demandeur: ATO CHIMIE, Société Anonyme dite:
La Défense 5 12/16 Allée des Vosges
F-92400 Courbevoie(FR)

(72) Inventeur: Deleens, Gérard
Bois de la Forge La Houssaye
F-27410 Beaumesnil(FR)

(74) Mandataire: Hirsch, Marc-Roger
34 rue de Bassano
F-75008 Paris(FR)

(54) **Matières textiles à base de polyoléfines.**

(57) La présente invention a pour objet des matières textiles nouvelles à base de polyoléfines.

Elle se rapporte à de telles matières textiles pourvues d'une composition comprenant un mélange homogène de une ou plusieurs polyoléfines et de un ou plusieurs polyétherestéramides, ledit mélange étant formé de 1 à 99% en poids de polyoléfines et de 99 à 1% en poids de polyétheresteramide.

EP 0 084 277 A2

MATIERES TEXTILES A BASE DE POLYOLEFINES

La présente invention a pour objet des matières textiles formées de compositions nouvelles à base de polyoléfines.

Les polyoléfines (polyéthylène, polypropylène, etc) sont utilisés avec avantage dans un grand nombre d'applications. On sait toutefois qu'elles ne sont pas complètement satisfaisantes pour les applications textiles nécessitant une affinité tinctoriale ou des propriétés d'antistatisme par exemple.

De nombreuses solutions ont été proposées pour la teinture des fibres de polypropylène. Ainsi notamment ont été proposées des solutions impliquant l'addition de résines époxy, de copolymères acryliques, ou encore la modification de l'état de surface par effet couronne, etc. Ces solutions sont restées au niveau de la recherche fondamentale, et n'ont pas reçu d'applications pratiques, ce qui témoigne de leur faible intérêt industriel.

Seule, a reçu une application industrielle, la coloration dans la masse, par des pigments organiques ou minéraux; cette méthode présente de nombreux inconvénients dont la nécessité de traiter des masses importantes pour obtenir une coloration uniforme.

La présente invention permet de pallier les inconvénients précités. En effet, elle permet d'obtenir des compositions à base de polyoléfines susceptibles d'être utilisées avec avantage en tant que matières textiles et donc d'élargir l'éventail des applications textiles des polyoléfines; notamment elle permet d'obtenir des produits à base de polyoléfines présentant diverses colorations et des propriétés améliorées d'antistatisme.

La présente invention a pour objet une matière textile formée d'une composition à base d'un mélange intime de une ou plusieurs polyoléfines et de un ou plusieurs polyestherestéramides, ledit mélange étant formé de 1 à 99% en poids de polyoléfine et de 99 à 1% en poids de polyétherestéramide.

Par polyétherestéramides, on entend aussi bien les polyétherestéramides statistiques (c'est-à-dire formés par l'enchaînement aléatoire des divers constituants monomères) que les polyétherestéramides séquencés c'est-à-dire formés de blocs présentant une certaine longueur de chaîne et leurs divers constituants

Les polyétherestéramides sont, comme il est connu, le produit de la copolycondensation de séquences polyamides à extrémités réactives avec des séquences polyéthers à extrémités réactives, telles que entre autres:

. séquences polyamides à fins de chaîne dicarboxyliques avec soit des séquences polyoxyalkylène α ,ω-dihydroxylés ou polyétherdiols soit des séquences polyétherdiamines (par cyanoéthylation et hydrogénation du polyétherdiol);

. séquences polyamides à fins de chaîne diamino avec des séquences polyéthers à fins de chaîne carboxyliques.

De tels produits ont été décrits dans les brevets français n° 74 18913 et 77 26678 dont le contenu doit être.ajouté à la présente description.

Selon un mode de réalisation de l'invention, les séquences polyamides des polyétherestéramides sont formées de préférence de polyamide 6, 6.6, 6.12, 11 ou 12 (PA-6, PA-11, PA-6.6, PA-6.12, PA-12) ou de copolyamides résultant de la polycondensation de leurs monomères.

De préférence le poids moléculaire de ces séquences polyamides est compris entre 500 et 10000 et plus particulièrement entre 1000 et 5000.

Selon un autre mode de réalisation de l'invention, les séquences polyéthers consistent en polytétraméthylène glycol (PTMG), polypropylène glycol (PPG) et de préférence en polyéthylène glycol (PEG).

De préférence le poids moléculaire des polyéthers est compris entre 150 et 5000 et plus particulièrement entre 400 et 3000.

Selon un autre mode de réalisation encore de l'invention, le polyétherestéramide précité est formé de 5 à 80% et plus particulièrement de 30 à 60% de polyéther et de 95 à 20% et de préférence 70 à 40% de polyamide.

Suivant une forme d'exécution de l'invention, la polyoléfine consiste en polypropylène (PP), polyéthylène (PE), leurs mélanges ou copolymères.

De préférence ledit mélange est formé de 75 à 99% de polyoléfine et de 25 à 1% de polyétherestéramide.

Bien entendu, lesdites compositions peuvent contenir les additifs habituels tels que anti UV, stabilisants à la chaleur ou à la lumière, azureurs optiques, etc.

Le procédé d'obtention de ces compositions consiste à opérer le mélange des deux matières premières sous forme pulvérente ou granulaire, à sec et à traiter le mélange obtenu dans une extrudeuse par exemple monovis ou double vis, des appareils de malaxage type Buss munis de filière. Les joncs obtenus sont granulés et ces granules alimentent des appareils de filage textile. Il est également possible d'extruder directement les fibres textiles par traitement du mélange précité dans un appareil approprié.

La présente invention se rapporte également aux matériaux textiles obtenus à partir de ces compositions et subsidiairement aux produits textiles teints obtenus à partir de ces compositions.

D'autres buts et avantages de la présente invention apparaîtront à la lecture de la description suivante et des exemples donnés à titre non limitatifs.

EXEMPLES 1-2

On opère dans une extrudeuse de filature de type Barmag pour obtenir par l'intermédiaire d'une filière 250 brins des fils de 12 d.tex au brin.

On traite dans cette extrudeuse un mélange formé de polypropylène homopolymère de grade 3020 SN3 vendu par la Société ATO CHIMIE dont l'indice de fusion (mesuré à 230°C et sous une charge de 5 kg) est de 8, et de polyétheresteramide formé de 50% de PA-6 de poids moléculaire égal à 1500 et de 50% de PEG de poids moléculaire égal à 1500.

Les rapports pondéraux polyoléfines/polyetheresteramide dans les compositions selon ces exemples 1 et 2 sont respectivement de 95/5 et 90/10.

A partir des fils de 12 d.tex obtenus, on tisse un tricot que l'on teint dans les conditions suivantes:

. déparaffinage à l'aide d'une solution aqueuse contenant de

| | |
|---|---|
| Sunaptol MB® | 2g/l |
| Galoran TSN®8 | 4g/l |
| Phosphate trisodique | 2g/l |

durant 1 heure à 90°C

. rinçage chaud puis froid

. teinture dans une solution hydroacétique de pH= 5 contenant

| | |
|---|---|
| bleu dimacide AJL | 3% |
| Sunaptol LT® | 1g/l |
| acide acétique 80% | qsp 100% |

La teinture se fait par immersion du tricot dans ladite solution à 40°C, montée en température jusqu'à 100°C en 1 heure, maintien pendant 1 heure à 100°C et refroidissement à 70°C

. rinçage.

La teinte obtenue est une teinte pastel (claire) où foncée selon que l'on emploie une proportion de 5 ou 10% de polyétherestéramide.

Les résultats obtenus sont consignés dans le tableau I.

EXEMPLES 3 et 4

On opère selon la méthode décrite dans les exemples 1 et 2, et avec les mêmes constituants employés dans les mêmes proportions en remplaçant toutefois PA-6 par PA-12.

Les résultats des propriétés physiques déterminées sur un tricot obtenu à partir de fils de 12 d.tex ainsi obtenus sur un tricot teint selon la méthode indiquée ci-dessus sont consignés dans le tableau I.

EXEMPLE 5

A titre de témoin, on opère selon la méthode des exemples précités, en ne traitant que du polypropylène.

Le traitement de teinture indiqué ci-dessus est appliqué sur un tricot formé des fils de 12 d.tex obtenus. On constate qu'il ne se produit pas "d'accrochage" de la teinture (cf tableau I).

L'analyse des résultats consignés dans le tableau I montre:

. qu'il est possible de teindre le polypropylène selon la technique utilisée pour les polyamides grâce à l'addition au polypropylène de copolyetherestéramides même si ces copolyetherestéramides sont employés en de faibles proportions;

. qu'il est possible de conférer au polypropylène une teinte durable et solide résistant à divers traitements mécaniques et également à l'action de la lumière;

. que la solidité aux frottements est excellente pour les matières textiles teintes selon l'invention.

TABLEAU I

Affinité tinctoriale

|  | 1 | 2 | 3 | 4 | 5 |
|---|---|---|---|---|---|
| Coloration | pastel | foncée | pastel | foncée | nulle |
| Solidité frottement sec | 5 | 5 | 5 | 5 | |
| Solidité frottement solvant | 5 | 5 | 5 | 5 | |
| Solidité lumière Norme NF GO7067 | 4 | 5 | 4 | 5 | |

5

0084277

Les mesures consignées dans le tableau I ont été effectuées dans les conditions suivantes:

. solidité lumière par exposition à la lampe à arc au xénon selon la norme NF G 07067 qui détermine la résistance des teintures sur textiles de toute nature et à tous leurs stades de transformation. Elle consiste à exposer une éprouvette de textile d'au moins 10 × 45 mm à la lumière d'une lampe à arc au xénon dans des conditions spécifiées côté d'une gamme d'étalons bleus puis à apprécier visuellement la solidité par comparaison de la dégradation de l'éprouvette avec celle des étalons. Chaque échantillon présente 3 zones d'exposition correspondant à des durées de 1-4 et 8 jours. Le résultat s'exprime par un indice (cotation) compris entre 1 (très faible) et 7 (excellent).

. solidité aux frottements on distingue les solidités des teintures au frottement sec et les solidités au frottement en présence de solvants organiques. La norme NF G 07016 décrit une méthode pour déterminer la résistance des teintures sur textiles de toute nature au frottement et au dégorgement par frottement sur d'autres textiles alors que la norme NF G 07066 décrit une méthode pour déterminer la résistance des teintures sur textiles de toute nature et à tous leurs stades de transformation, à l'action du frottement en présence de solvants organiques (le perchloréthylène le plus souvent) tel que celui qui est utilisé pour le détachage par tamponnement. Dans les deux cas, la cotation va de 1 (très faible) à 5 (excellent).

EXEMPLES 6 à 9

Des résultats analogues sont obtenus avec les colorants suivants:

. bordeaux S3BL double        3% sur des compositions identiques à celles des exemples 2 à 5 respectivement.

On opère selon la méthode décrite dans les exemples 1 à 5. Les résultats obtenus sont consignés dans le tableau II.

TABLEAU II

|  | 6 | 7 | 8 | 9 |
|---|---|---|---|---|
| Coloration | soutenue | foncée | soutenue | foncée |
| Solidité frottement sec | 5 | 6 | 5 | 6 |
| Solidité frottement solvant | 5 | 6 | 5 | 6 |
| Solidité lumière Norme NF G07067 | 4 | 5 | 4 | 5 |

De même des essais identiques effectués avec 3% de Noir SPLL donnent des résultats égaux à 6 pour toutes les mesures effectuées.

Le tableau II , par ailleurs, montre que les propriétés d'antistatisme sont améliorées pour des tricots obtenus à partir des compositions selon les exemples 1 à 4 par rapport à celles des tricots formés de la polyoléfine de l'exemple 5.

Les mesures d'antistatisme sont effectuées sur des tricots constitués de fibres obtenues à partir des compositions selon les exemples 1 à 9. Le test pratique d'appréciation du pouvoir antistatique consiste à développer par frottement des charges électrostatiques, dans des conditions toujours identiques et d'apprécier la charge ainsi créée. Ces conditions consistent à opérer sur des tricots préalablement dégraissés et parfaitement conditionnés, à l'aide d'un abrasimètre connu dans le commerce sous le nom de abrasimètre PETER avec comme frotteur une toile métallique. Le nombre de frottements est fixé à 450 et on opère à 25°C et à une humidité relative de 25%.

On constate, aux erreurs d'expériences près, que les produits des exemples 1 à 7 présentent des propriétés d'antistatisme indépendantes de la coloration, et nettement supérieures à celles des produits de l'exemple 5.

L'antistatisme est d'autant plus marqué que la teneur en polyéstherestéramide est plus forte.

Dans ce qui précède on a désigné par commodité par leur dénomination commerciale courante le polytétraméthylène glycol, le polyéthylène glycol et le polypropylène glycol , ce qui correspond selon la nomenclature officielle à polyoxytétraméthylène glycol, polyoxyéthylène glycol et polyoxypropylène glycol.

1

**0084277**

1. Matière textile formée d'une composition à base d'un mélange intime de une ou plusieurs polyoléfines et de un ou plusieurs polyétherestéramides, ledit mélange étant formé de 1 à 99% en poids de polyoléfine et de 99 à 1% en poids de polyétherestéramide.

2. Matière textile selon la revendication 1, caractérisée en ce que les polyétherestéramides sont des polyétherestéramides statistiques.

3. Matière textile selon la revendication 1, caractérisée en ce que les polyétherestéramides consistent en les produits de la copolycondensation de séquences polyamides à extrémités réactives avec des séquences polyéthers à extrémités réactives, telles que entre autres:

. séquences polyamides à fins de chaîne dicarboxyliques avec soit des séquences polyétherdiols soit des séquences polyétherdiamines (par cyanoéthylation et hydrogénation du polyétherdiol);

. séquences polyamides à fins de chaîne diamino avec des séquences polyéthers à fins de chaîne carboxyliques.

4. Matière textile selon les revendications 1 à 3, caractérisée en ce que les séquences polyamides des polyétherestéramides sont formées de préférence de polyamide 6, 11, 6.6, 6.12, ou 12 (PA-6, PA-11, PA-6.6, PA-6.12, PA-12) ou de copolyamide résultant de la copolycondensation de leurs monomères.

5. Matière textile selon la revendication 4, caractérisée en ce que le poids moléculaire de ces séquences polyamides est compris entre 500 et 10000 et plus particulièrement entre 1000 et 5000.

6. Matière textile selon une quelconque des revendications 1 à 3, caractérisée en ce que les séquences polyéthers consistent en polyoxytétraméthylène glycol (PTMG), polyoxypropylène glycol (PPG) ou polyoxyéthylène glycol (PEG).

7. Matière textile selon la revendication 6, caractérisée en ce que le poids moléculaire des polyéthers est compris entre 150 et 5000 et plus particulièrement entre 400 et 3000.

8. Matière textile selon une quelconque des revendications 1 à 7, caractérisée en ce que le polyétherestéramide précité est formé de 5 à 80% et plus particulièrement de 30 à 60% de polyéther et de 95 à 20% et de préférence 70 à 40% de polyamide.

9. Matière textile selon une quelconque des revendications 1 à 8, caractérisée en ce que la polyoléfine consiste en polypropylène (PP), polyéthylène (PE), leurs mélanges ou copolymères.

2                                    0084277

10. Matière textile selon une quelconque des revendications 1 à 9, caractérisée en ce que ledit mélange est formé de 75 à 99% de polyoléfine et de 25 à 1% de polyétherestéramide.